# EUROPEAN PATENT APPLICATION

(11) **EP 4 435 895 A1**
(43) Date of publication of application: **25.09.2024**
(21) Application number: 24154313.1
(22) Date of filing: 29.01.2024
(51) Int. Cl.: H01M 4/525, H01M 10/0525, H01M 10/0567, H01M 10/0568, H01M 10/0569

(54) **NONAQUEOUS ELECTROLYTE SECONDARY BATTERY**

(30) Priority: 22.03.2023 JP 2023045802
(71) Applicant: Prime Planet Energy & Solutions, Inc., Chuo-ku Tokyo 103-0022 (JP)
(72) Inventor: KONDO, Shimpei, Tokyo, 103-0022 (JP); MATSUTA, Takahisa, Tokyo, 103-0022 (JP)
(74) Representative: Kuhnen & Wacker Patent- und Rechtsanwaltsbüro PartG mbB

(57) **Abstract**

Provided is a nonaqueous electrolyte secondary battery having excellent output characteristics while using a ternary active material with a small cobalt content. A nonaqueous electrolyte secondary battery disclosed here includes a positive electrode, a negative electrode, and a nonaqueous electrolyte. The positive electrode includes a positive electrode active material layer containing a positive electrode active material. The positive electrode active material includes a lithium nickel cobalt manganese composite oxide. In the composite oxide, a molar ratio of Ni to all metal elements except for Li is 40% by mole to 60% by mole, and a molar ratio of Co to all the metal elements except for Li is 15% by mole to 25% by mole. The composite oxide is in a form of hollow particles each including a shell portion, a hollow portion defined in the shell portion, and a through hole penetrating the shell portion. The composite oxide has a BET specific surface area of 3.0 m²/g or more. The nonaqueous electrolyte contains a nonaqueous solvent, an electrolyte salt, and lithium bis(oxalato)borate. The nonaqueous solvent contains a carboxylate ester having 4 or less carbon atoms.

## Description

### TECHNICAL FIELD

The present disclosure relates to a nonaqueous electrolyte secondary battery.

### BACKGROUND

In recent years, from the perspective of decarbonization, there has been a rapidly increasing demand for battery electric vehicles (BEVs), hybrid electric vehicles (HEVs), plug-in hybrid electric vehicles (PHEVs), and the like. Accordingly, the demand for nonaqueous electrolyte secondary batteries serving as drive power supplies for these vehicles has been rapidly increasing.

As a typical positive electrode active material to be used for a nonaqueous electrolyte secondary battery, a lithium nickel cobalt manganese composite oxide, which is also called a ternary active material, is known (see, for example, Patent Documents 1 to 4). As such a ternary active material, an active material containing Ni, Co, and Mn in approximately equimolar amounts (i.e., at a molar ratio of about 1:1:1) is commonly used in practical applications.

### CITATION LIST

### PATENT DOCUMENTS

Patent Document 1: Japanese Patent Application Publication No. 2022-09722
Patent Document 2: Japanese Patent Application Publication No. 2020-95842
Patent Document 3: Japanese Translation of PCT International Application Publication No. 2018-530122
Patent Document 4: International Patent Publication No. 2021/186949

### SUMMARY

If the demand for BEVs continues to increase for decarbonization, there arises a concern that resources for nonaqueous electrolyte secondary batteries may become short in the future. One of the resources for which shortage is a concern is cobalt (Co). One of possible measures for the shortage is to reduce a cobalt content in the ternary active material. On the other hand, however, further increase in output has been demanded for nonaqueous electrolyte secondary batteries, and a ternary active material with a small cobalt content has a disadvantage of insufficient output characteristics.

Embodiments of the present disclosure provide nonaqueous electrolyte secondary batteries each having excellent output characteristics while using a ternary active material with a small cobalt content.

A nonaqueous electrolyte secondary battery disclosed here includes a positive electrode, a negative electrode, and a nonaqueous electrolyte. The positive electrode includes a positive electrode active material layer containing a positive electrode active material. The positive electrode active material includes a lithium nickel cobalt manganese composite oxide. In the lithium nickel cobalt manganese composite oxide, a molar ratio of Ni to all metal elements except for Li is 40% by mole to 60% by mole, and a molar ratio of Co to all the metal elements except for Li is 15% by mole to 25% by mole. The lithium nickel cobalt manganese composite oxide is in a form of hollow particles each including a shell portion, a hollow portion defined in the shell portion, and a through hole penetrating the shell portion. The lithium nickel cobalt manganese composite oxide has a BET specific surface area of 3.0 m²/g or more. The nonaqueous electrolyte contains a nonaqueous solvent, an electrolyte salt, and lithium bis(oxalato)borate. The nonaqueous solvent contains a carboxylate ester having 4 or less carbon atoms.

This configuration provides nonaqueous electrolyte secondary batteries each having excellent output characteristics while using a ternary active material with a small cobalt content.

### BRIEF DESCRIPTION OF THE DRAWINGS

FIG. 1 is a cross-sectional view schematically illustrating an internal structure of a lithium ion secondary battery according to one embodiment of the present disclosure.
FIG. 2 is a schematic disassembled view illustrating a structure of a wound electrode body of a lithium ion secondary battery according to one embodiment of the present disclosure.
FIG. 3 is a schematic cross-sectional view illustrating an example of hollow particles of a positive electrode active material used in a lithium ion secondary battery according to one embodiment of the present disclosure.
FIG. 4 is a schematic cross-sectional view illustrating another example of hollow particles of a positive electrode active material used in a lithium ion secondary battery according to one embodiment of the present disclosure.

### DETAILED DESCRIPTION

An embodiment of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

A "secondary battery" herein refers to an electricity storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

The present disclosure will be described in detail hereinafter using a flat square lithium ion secondary battery including a flat wound electrode body and a flat battery case as an example, but the present disclosure is not intended to be limited to the embodiment.

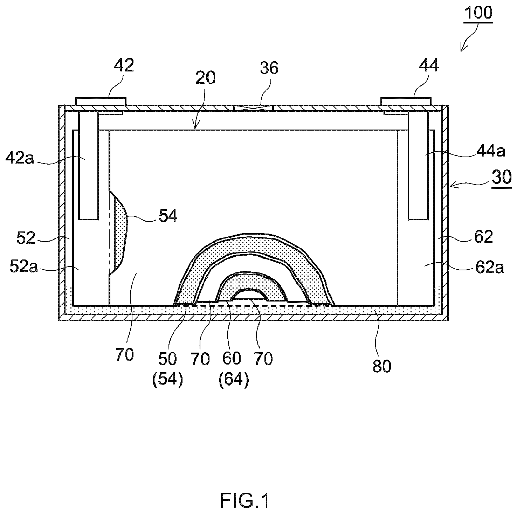

A lithium ion secondary battery 100 illustrated in FIG. 1 is a sealed battery in which a flat wound electrode body 20 and a nonaqueous electrolyte 80 are housed in a flat square battery case (i.e., an outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte 80. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminum. FIG. 1 does not strictly illustrate the amount of the nonaqueous electrolyte 80.

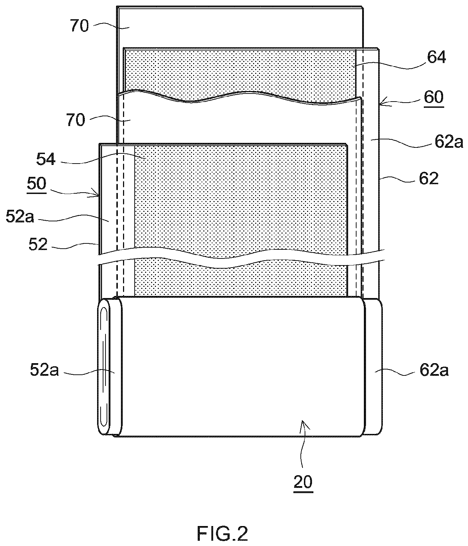

As illustrated in FIGS. 1 and 2, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminium foil as the positive electrode current collector 52, the thickness thereof is not specifically limited, and is, for example, 5 µm or more and 35 µm or less, and desirably 7 µm or more and 20 µm or less.

The positive electrode active material layer 54 contains a positive electrode active material. In this embodiment, as the positive electrode active material, at least a lithium nickel cobalt manganese composite oxide is used.

It should be noted that the "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I.

In a lithium nickel cobalt manganese composite oxide commonly used in practical applications, a molar ratio of Co to all the metal elements except for Li is about 30% by mole to 33.3% by mole. On the other hand, the lithium nickel cobalt manganese composite oxide used in this embodiment has a small Co content and thus, in the lithium nickel cobalt manganese composite oxide, a molar ratio of Co to all the metal elements except for Li is 15% by mole to 25% by mole. In addition, a molar ratio of Ni to all the metal elements except for Li is 40% by mole to 60% by mole. In this embodiment, a lithium nickel cobalt manganese composite oxide satisfying the Ni molar ratio and the Co molar ratio described above may be used alone, or two or more types of lithium nickel cobalt manganese composite oxides satisfying the Ni molar ratio and the Co molar ratio described above may be used in combination. The molar ratio of Co is desirably 15% by mole to 22% by mole, more desirably 15% by mole to 20% by mole.

Specifically, for example, the lithium nickel cobalt manganese composite oxide has a composition represented by the following formula (I):

Li₁₊ₓNi_{y}Co_{z}Mn_{(1-y-z)}M_{α}O_{2-β}Q_{β} (I)

In formula (I), x, y, z, α, and β satisfy -0.05 ≤ x ≤ 0.3, 0.4 ≤ y ≤ 0.6, 0.15 ≤ z ≤ 0.25, 0 ≤ α ≤ 0.1, and 0 ≤ β ≤ 0.5, respectively. M is at least one element selected from the group consisting of Zr, Mo, W, Mg, Ca, Na, Fe, Cr, Zn, Sn, B, and Al. Q is at least one element selected from the group consisting of F, Cl, and Br.

x desirably satisfies 0 ≤ x ≤ 0.3, more desirably 0 ≤ x ≤ 0.20. y desirably satisfies 0.45 ≤ y ≤ 0.6. z desirably satisfies 0.15 ≤ z ≤ 0.22, more desirably 0.15 ≤ z ≤ 0.20. α desirably satisfies 0 ≤ α ≤ 0.05, more desirably 0 ≤ α ≤ 0.03. β desirably satisfies 0 ≤ β ≤ 0.1, more desirably 0.

In regard to the particle shape of the positive electrode active material used in this embodiment, the lithium nickel cobalt manganese composite oxide has a hollow particulate shape, that is, in a form of hollow particles, and each of the hollow particles has a shell portion, a hollow portion defined in the shell portion, and a through hole penetrating the shell portion. The number of hollow portions is not particularly limited, and may be one, or may be two or more, desirably one. The number of through holes is not particularly limited, and may be one, or may be two or more.

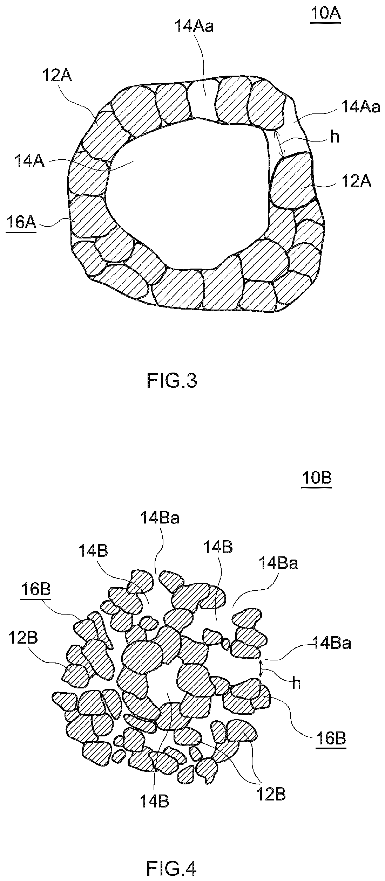

FIGS. 3 and 4 illustrate examples of the hollow particle. Each of FIGS. 3 and 4 is a schematic cross-sectional view of the example of the hollow particle of the positive electrode active material. In the example illustrated in FIG. 3, a hollow particle 10A has one hollow portion 14A, and primary particles 12A of a lithium nickel manganese cobalt composite oxide are connected in a ring shape to form a shell portion 16A in the hollow particle 10A. In the illustrated example, the primary particles 12A form a single layer, but the primary particles 12A may be stacked in the thickness direction of the shell portion 16A to form multiple layers. The shell portion 16A surrounds the hollow portion 14A. The shell portion 16A has through holes 14Aa, and each of the through holes 14Aa has an opening width h enough to allow the nonaqueous electrolyte 80 to enter the hollow portion 14A.

In the example illustrated in FIG. 4, primary particles 12B are agglomerated more loosely than usual, and accordingly, a hollow particle 10B has a plurality of relatively large hollow portions 14B. It should be noted that in FIG. 4, some primary particles 12B appear to be separated from other particles, but this is because FIG. 4 is a cross-sectional view, and these particles are actually in contact with other primary particles (not shown) in an area not shown in the drawing. In the hollow particle 10B, agglomerated primary particles 12B form shell portions 16B each surrounding the corresponding one of the hollow portions 14B. Each of the shell portions 16B has a through hole 14Ba, and each of the through holes 14Ba has an opening width h enough to allow the nonaqueous electrolyte 80 to enter the hollow portion 14B.

The lithium nickel cobalt manganese composite oxide has a BET specific surface area of 3.0 m²/g or more. Such a large BET specific surface area is achieved by forming the lithium nickel cobalt manganese composite oxide in the hollow particulate shape and enlarging the inner surface of the particles. The BET specific surface area is desirably 3.1 m²/g or more. The upper limit of the BET specific surface area is not particularly limited, and is determined by technical limitation. The BET specific surface area is, for example, 4.0 m²/g or less, and can be 3.8 m²/g or less, 3.6 m²/g or less, or 3.4 m²/g or less. The BET specific surface area is desirably 3.0 m²/g to 3.6 m²/g, more desirably 3.1 m²/g to 3.4 m²/g. It should be noted that the BET specific surface area can be measured by a known method using nitrogen (N₂) gas as an adsorbate. Specifically, the BET specific surface area can be determined by measurement based on a BET method using nitrogen (N₂) gas and a commercially available specific surface area measurement device.

By combining such a lithium nickel cobalt manganese composite oxide with the nonaqueous electrolyte 80 including a carboxylate ester having 4 or less carbon atoms and lithium bis(oxalato)borate, the lithium ion secondary battery 100 can obtain excellent output characteristics in spite of using the ternary active material with a small cobalt content. This is because of the following reasons. It should be noted that the nonaqueous electrolyte 80 will be specifically described in detail later.

The lithium nickel cobalt manganese composite oxide has a large surface area usable for battery reaction because of its hollow particle structure with a specific surface area increased to the range of 3.0 m²/g or more. In particular, the nonaqueous electrolyte 80 has a viscosity reduced by the carboxylate ester having 4 or less carbon atoms, and the through holes in the shell portions of the hollow particles allow the nonaqueous electrolyte 80 to enter the hollow portions of the hollow particles easily. Accordingly, even at the inner surfaces of particles, battery reaction can be efficiently performed. This enables reduction of resistance (i.e., increase in output) during discharge of the lithium ion secondary battery 100.

However, since the carboxylate ester is easily decomposed and the lithium nickel cobalt manganese composite oxide has a very large specific surface area, decomposition of the carboxylate ester is more likely to occur. Consequently, the effect of reducing resistance (effect of increasing output) by the carboxylate ester cannot be sufficiently exhibited. In view of this, in this embodiment, the nonaqueous electrolyte 80 contains lithium bis(oxalato)borate (LiBOB) as a film forming agent. This LiBOB allows a coating to be formed not only on the surface of the negative electrode 60 but also on the surface of the positive electrode 50 (especially the positive electrode active material) to suppress oxidative decomposition of the carboxylate ester and as a result, an effect of reducing resistance (i.e., an effect of increasing output) can be remarkably exhibited. In this manner, cooperation of the specific particulate shape and the BET specific surface area of the lithium nickel cobalt manganese composite oxide, the carboxylate ester having 4 or less carbon atoms in the nonaqueous solvent, and LiBOB as the film forming agent can significantly enhance output characteristics of the lithium ion secondary battery 100.

A porosity of the hollow particles is not particularly limited, and is desirably 20% to 50%. It should be noted that the porosity of hollow particles can be determined as follows. A cross-sectional electron microscopic image of hollow particles is obtained, and a proportion of a total area of gaps to an area of the entire particles (sum of an area occupied by the particles and an area of the gaps) is calculated on a percentage basis. This value is calculated for 100 or more hollow particles, and an average of the obtained values is defined as a porosity of the hollow particles.

A DBP absorption amount of hollow particles is not particularly limited, and is desirably 35 mL/100g to 50 mL/100g. It should be noted that the DBP absorption amount can be measured by using dibutyl phthalate (DBP) as a reagent liquid and in conformity with the method described in JIS K6217-4:2008, and can be determined as an average of results of three measurements.

An average particle size (median diameter: D50) of the lithium nickel cobalt manganese composite oxide is not particularly limited, and is, for example, 0.05 µm or more and 25 µm or less, desirably 1 µm or more and 20 µm or less, more desirably 2 µm or more and 15 µm or less. It should be noted that the average particle size (D50) of the positive electrode active material can be determined by, for example, a laser diffraction/scattering method.

Various production methods of hollow particulate lithium nickel cobalt manganese composite oxides are known, and the hollow particulate lithium nickel cobalt manganese composite oxide used in this embodiment can be obtained according to a known method.

The positive electrode active material may contain a positive electrode active material other than the lithium nickel manganese cobalt composite oxide within a range that does not significantly inhibit the effects of the present disclosure (e.g., less than 10% by mass, desirably 5% by mass or less, of the total mass of the positive electrode active material). The positive electrode active material may consist essentially of or consist only of a lithium nickel manganese cobalt composite oxide.

A content of the positive electrode active material in the positive electrode active material layer 54 (i.e., content of the positive electrode active material with respect to the total mass of the positive electrode active material layer 54) is not specifically limited, and is, for example, 80% by mass or more, desirably 87% by mass or more, more desirably 90% by mass or more, even more desirably 95% by mass or more, much more desirably 97% by mass or more.

The positive electrode active material layer 54 may contain components other than the positive electrode active material (i.e., optional components). Examples of the optional components include a conductive agent and a binder.

Examples of the conductive agent include carbon materials such as carbon black (e.g., acetylene black), carbon nanotubes (CNTs), and graphite, and among these materials, CNTs are desirable. Since the CNTs have high conductivity, output characteristics of the lithium ion secondary battery 100 can be further enhanced. In addition, the CNTs have hollow structures, and the carboxylate ester having 4 or less carbon atoms can enter these hollow structures. Thus, wettability between the positive electrode active material layer 54 and the nonaqueous electrolyte 80 is increased thereby, so that output characteristics of the lithium ion secondary battery 100 can be further enhanced. In a case where the positive electrode active material layer 54 contains CNTs, the positive electrode active material layer 54 may further contain dispersers of CNTs (e.g., a surface-active agent type disperser, a polymeric disperser, or an inorganic disperser, etc.).

A content of the conductive agent in the positive electrode active material layer 54 is not specifically limited, and is desirably 0.1% by mass or more and 15% by mass or less, more desirably 0.5% by mass or more and 13% by mass or less.

Examples of the binder include polyvinylidene fluoride (PVdF). A content of the binder in the positive electrode active material layer 54 is not specifically limited, and is desirably 1% by mass or more and 15% by mass or less, more desirably 1.5% by mass or more and 10% by mass or less.

A thickness of the positive electrode active material layer 54 is not specifically limited, and is, for example, 10 µm or more and 300 µm or less, and desirably 20 µm or more and 200 µm or less.

A weight per unit area of the positive electrode active material layer 54 is not particularly limited, and is desirably 4 mg/cm² or more, more desirably 8 mg/cm² or more, even more desirably 10 mg/cm² or more, especially desirably 20 mg/cm² or more. The weight per unit area of the positive electrode active material layer 54 may be 50 mg/cm² or less, or 40 mg/cm² or less.

The positive electrode sheet 50 may include an insulating layer (not shown) at the boundary between the positive electrode active material layer non-formed portion 52a and the positive electrode active material layer 54. The insulating layer contains ceramic particles, and the like.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness of the foil is not particularly limited, and is, for example, 5 µm or more and 35 µm or less, desirably 6 µm or more and 20 µm or less.

The negative electrode active material layer 64 contains a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

An average particle size (median particle size: D50) of the negative electrode active material is not specifically limited, and is, for example, 0.1 µm or more and 50 µm or less, desirably 1 µm or more and 25 µm or less, more desirably 5 µm or more and 20 µm or less. It should be noted that the average particle size (D50) of the negative electrode active material can be determined by, for example, a laser diffraction/scattering method.

The negative electrode active material layer 64 can include components other than the active material, such as a binder or a thickener. Examples of the binder include styrene-butadiene rubber (SBR) and polyvinylidene fluoride (PVdF). Examples of the thickener include carboxymethyl cellulose (CMC).

A content of the negative electrode active material in the negative electrode active material layer 64 is desirably 90% by mass or more, more desirably 95% by mass or more and 99% by mass or less. A content of the binder in the negative electrode active material layer 64 is desirably 0.1% by mass or more and 8% by mass or less, more desirably 0.5% by mass or more and 3% by mass or less. A content of the thickener in the negative electrode active material layer 64 is desirably 0.3% by mass or more and 3% by mass or less, more desirably 0.5% by mass or more and 2% by mass or less.

A thickness of the negative electrode active material layer 64 is not particularly limited, and is, for example, 10 µm or more and 400 µm or less, desirably 20 µm or more and 300 µm or less.

Examples of the separator 70 include a porous sheet (film) of a resin such as polyethylene (PE), polypropylene (PP), polyester, cellulose, or polyamide. The porous sheet may have a single-layer structure or a laminated structure of two or more layers (e.g., three-layer structure in which a PP layer is stacked on each surface of a PE layer). A heat-resistance layer (HRL) containing ceramic particles and the like may be provided on a surface of the separator 70.

A thickness of the separator 70 is not particularly limited, and is, for example, 5 µm or more and 50 µm or less, desirably 10 µm or more and 30 µm or less. An air permeability of the separator 70 obtained by a Gurley permeability test is not particularly limited, and is desirably 350 sec./100cc or less.

In this embodiment, the nonaqueous electrolyte 80 contains a nonaqueous solvent, an electrolyte salt, and lithium bis(oxalato)borate. The nonaqueous solvent contains a carboxylate ester having 4 or less carbon atoms.

The carboxylate ester having 4 or less carbon atoms has the effect of reducing viscosity of the nonaqueous electrolyte 80, as described above. Examples of the carboxylate ester having 4 or less carbon atoms include methyl acetate, ethyl acetate, propyl acetate, and among these, methyl acetate is desirable.

When the content of carboxylate in the nonaqueous solvent is excessively small, the effect of increasing output might be small. Thus, the volume ratio of the carboxylate ester in the nonaqueous solvent is desirably 1% by volume or more, more desirably 3% by volume or more, even more desirably 10% by volume or more, particularly desirably 15% by volume or more. On the other hand, when the content of the carboxylate ester in the nonaqueous solvent is excessively large, decomposition of carboxylate might easily occur. Thus, a volume ratio of the carboxylate ester in the nonaqueous solvent is desirably 50% by volume or less, more desirably 40% by volume or less, particularly desirably 30% by volume or less.

The nonaqueous solvent can include an organic solvent other than the carboxylate ester. Examples of the organic solvent include carbonates, ethers, nitriles, sulfones, and lactones, and among these, carbonates are desirable. Examples of the carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such organic solvents may be used alone, or two or more of them may be used in combination. The nonaqueous solvent may include only carbonates and the carboxylate ester.

The nonaqueous electrolyte 80 can contain an electrolyte salt (i.e., supporting electrolyte). Desired examples of the electrolyte salt include lithium salts (desirably LiPF₆) such as LiPF₆, LiBF₄, and lithium bis(fluorosulfonyl)imide (LiFSI). A concentration of the electrolyte salt in the nonaqueous electrolyte 80 is desirably 0.7 mol/L or more and 1.3 mol/L or less.

The nonaqueous electrolyte 80 contains lithium bis(oxalato)borate (LiBOB). As described above, LiBOB forms coating on the surface of the positive electrode active material to thereby suppress decomposition of the carboxylate ester, which contributes to reduction of resistance (i.e., increase of output) of the lithium ion secondary battery 100. When a concentration of LiBOB in the nonaqueous electrolyte 80 is excessively small, the effect of increasing output might be small. Thus, the concentration of LiBOB in the nonaqueous electrolyte 80 is desirably 0.15% by mass or more, more desirably 0.20% by mass or more, even more desirably 0.30% by mass or more. On the other hand, when the concentration of LiBOB in the nonaqueous electrolyte 80 is excessively large, coating is excessively formed, resulting in a decrease in the effect of increasing output. Thus, the concentration of LiBOB in the nonaqueous electrolyte 80 is desirably 0.80% by mass or less, more desirably 0.70% by mass or less, even more desirably 0.60% by mass or less.

The nonaqueous electrolyte 80 may include components not described above, for example, various additives exemplified by: gas generating agents such as biphenyl (BP) and cyclohexylbenzene (CHB); and thickeners, to the extent that the effects of the present disclosure are not significantly impaired.

The lithium ion secondary battery 100 has excellent output characteristics while using the ternary active material with a small cobalt content. In the lithium ion secondary battery 100, since the ternary active material with a small cobalt content is used, the problem of shortage of cobalt resources associated with decarbonization can be largely relieved.

The lithium ion secondary battery 100 is applicable to various applications. Examples of suitable applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for, for example, a small-size power storage device. Since the lithium ion secondary battery 100 has excellent output characteristics, the lithium ion secondary battery 100 is especially desirably applicable to drive power supplies to be mounted on vehicles such as battery electric vehicles (BEVs), hybrid electric vehicles (HEVs), and plug-in hybrid electric vehicles (PHEVs) (especially drive power supply for HEVs). The lithium ion secondary battery 100 can be used in a form of a battery module in which a plurality of batteries are typically connected in series and/or in parallel.

The foregoing description is directed to the square lithium ion secondary battery 100 including the flat wound electrode body 20 as an example. Alternatively, the lithium ion secondary battery can also be configured as a lithium ion secondary battery including a stacked-type electrode body (i.e., electrode body in which a plurality of positive electrodes and a plurality of negative electrodes are alternately stacked). The lithium ion secondary battery can also be configured as a cylindrical lithium ion secondary battery or a laminated-case lithium ion secondary battery.

The secondary battery according to this embodiment can be configured as a nonaqueous secondary battery other than a lithium ion secondary battery according to a known method.

Examples of the present disclosure will now be described in detail, but are not intended to limit the present disclosure to these examples.

### [Examples 1 to 12 and Comparative Examples 1 to 6]

As a positive electrode active material, LiNi_{0.5}Co_{0.2}Mn_{0.3}O₂ having a BET specific surface area shown in Table 1 was prepared. The BET specific surface area was determined with a commercially available specific surface area measurement device by using a nitrogen (N₂) gas as an adsorbate. The positive electrode active materials of the examples and the comparative examples were hollow particles each having a shell portion, a hollow portion defined in the shell portion, and a through hole penetrating the shell portion.

This positive electrode active material, a carbon nanotube (CNT) dispersion as a conductive agent, and PVdF as a binder were kneaded at a solid content mass ratio of active material:CNT:PVdF = 97.5:1.5:1.0 in N-methyl-2-pyrrolidone, thereby preparing positive electrode slurry. The positive electrode slurry was applied onto aluminum foil as a positive electrode current collector and dried, thereby obtaining a positive electrode sheet.

Natural graphite (C) as a negative electrode active material, styrene-butadiene rubber (SBR) as a binder, and carboxymethyl cellulose (CMC) as a thickener were mixed at a mass ratio of C:SBR:CMC = 98:1:1 in pure water, thereby preparing negative electrode slurry. The negative electrode slurry was applied onto copper foil and dried, thereby obtaining a negative electrode sheet.

As a separator, a porous polyolefin sheet was prepared. The positive electrode sheet and the negative electrode sheet were stacked to sandwich a separator, thereby producing an electrode body. In the electrode body, an electrode opposed area was about 20 cm².

A mixed solvent including ethylene carbonate (EC), ethyl methyl carbonate (EMC), dimethyl carbonate (DMC), and a carboxylate ester shown in Table 1 at a volume ratio (% by volume) of 30:30-x:40:x was prepared. The value of x was the value shown in Table 1. In the mixed solvent, LiPF₆ as a supporting electrolyte was dissolved at a concentration of 1.1 mol/L, and lithium bis(oxalate)borate was dissolved at a concentration shown in Table 1. In this manner, a nonaqueous electrolyte was obtained.

Terminals were attached to the electrode body, and this electrode body was housed in a laminated case together with a nonaqueous electrolyte. Thereafter, the laminated case was sealed, thereby obtaining an evaluation lithium ion secondary battery with a capacity of about 20 mAh. The evaluation lithium ion secondary battery was subj ected to initial charging at a current value of 1/3 C, and then subjected to an aging treatment at 60°C for 24 hours for activation.

### <Output Evaluation - Output Resistance Measurement>

Each activated evaluation lithium ion secondary battery was adjusted to have a state of charge (SOC) of 50% in a thermostat at 25°C. Next, in the thermostat at 25°C, the evaluation lithium ion secondary battery was discharged for 10 seconds with a current value of 5 C to 45 C, and a battery voltage after discharge at each current value was measured. The current values and the battery voltages were plotted to obtain I-V characteristics in discharge, and from the slope of the obtained line, an IV resistance (Ω) in discharging was determined as an output resistance. In a case where the output resistance of the evaluation lithium ion secondary battery of Comparative Example 1 was 1.00, ratios of output resistances of other evaluation lithium ion secondary batteries to the evaluation lithium ion secondary battery of Comparative Example 1 were determined. Table 1 shows the results.

### [Table 1]

**Table 1**

| | Active material BET (m² /g) | Carboxylate ester | | LiBOB concentration (mass%) | Output resistance ratio |
|---|---|---|---|---|---|
| | | Type | x (vol.%) | | |
| Example 1 | 3.1 | methyl acetate | 3 | 0.5 | 0.89 |
| Example 2 | 3.1 | methyl acetate | 15 | 0.5 | 0.86 |
| Example 3 | 3.1 | methyl acetate | 30 | 0.5 | 0.85 |
| Example 4 | 3.1 | methyl propionate | 3 | 0.5 | 0.90 |
| Example 5 | 3.1 | methyl propionate | 15 | 0.5 | 0.88 |
| Example 6 | 3.1 | methyl propionate | 30 | 0.5 | 0.88 |
| Example 7 | 3.1 | ethyl acetate | 3 | 0.5 | 0.90 |
| Example 8 | 3.1 | ethyl acetate | 15 | 0.5 | 0.87 |
| Example 9 | 3.1 | ethyl acetate | 30 | 0.5 | 0.86 |
| Example 10 | 3.4 | methyl acetate | 3 | 0.5 | 0.86 |
| Example 11 | 3.1 | methyl acetate | 3 | 0.2 | 0.85 |
| Example 12 | 3.1 | methyl acetate | 3 | 0.7 | 0.89 |
| Comparative Example 1 | 3.1 | - | 0 | 0.5 | 1.00 |
| Comparative Example 2 | 3.1 | methyl acetate | 3 | 0.5 | 0.98 |
| Comparative Example 3 | 2 | methyl acetate | 3 | 0.5 | 1.06 |
| Comparative Example 4 | 2.4 | methyl acetate | 3 | 0.5 | 0.93 |
| Comparative Example 5 | 2.6 | methyl acetate | 3 | 0.5 | 0.93 |
| Comparative Example 6 | 2.8 | methyl acetate | 3 | 0.5 | 0.92 |

As shown by the results of Table 1, it can be understood that output resistance is significantly low in a case where in the lithium nickel cobalt manganese composite oxide, a molar ratio of Ni to all the metal elements except for Li is 40% by mole to 60% by mole, a molar ratio of Co to all the metal elements except for Li is 15% by mole to 25% by mole, the lithium nickel cobalt manganese composite oxide has a hollow particulate shape including a shell portion, a hollow portion, and a through hole penetrating the shell portion, the lithium nickel cobalt manganese composite oxide has a BET specific surface area of 3.0 m²/g or more, and the nonaqueous electrolyte includes a carboxylate ester having 4 or less carbon atoms and lithium bis(oxalato)borate. Accordingly, it can be understood that the nonaqueous electrolyte secondary battery disclosed here has excellent output characteristics while using the ternary active material with a small cobalt content.

Specific examples of the present disclosure have been described in detail hereinbefore, but are merely illustrative examples, and are not intended to limit the scope of claims. The techniques described in claims include various modifications and changes of the above exemplified specific examples.

That is, the nonaqueous electrolyte secondary battery disclosed here is the following items [1] to [7].
[1] A nonaqueous electrolyte secondary battery including:
   a positive electrode;
   a negative electrode; and
   a nonaqueous electrolyte, in which
   the positive electrode includes a positive electrode active material layer containing a positive electrode active material,
   the positive electrode active material includes a lithium nickel cobalt manganese composite oxide,
   in the lithium nickel cobalt manganese composite oxide, a molar ratio of Ni to all metal elements except for Li is 40% by mole to 60% by mole, and a molar ratio of Co to all the metal elements except for Li is 15% by mole to 25% by mole,
   the lithium nickel cobalt manganese composite oxide is in a form of hollow particles each including a shell portion, a hollow portion defined in the shell portion, and a through hole penetrating the shell portion,
   the lithium nickel cobalt manganese composite oxide has a BET specific surface area of 3.0 m²/g or more,
   the nonaqueous electrolyte contains a nonaqueous solvent, an electrolyte salt, and lithium bis(oxalato)borate, and
   the nonaqueous solvent contains a carboxylate ester having 4 or less carbon atoms.
[2] The nonaqueous electrolyte secondary battery of item [1] in which a concentration of lithium bis(oxalato)borate in the nonaqueous electrolyte is 0.20% by mass to 0.80% by mass.
[3] The nonaqueous electrolyte secondary battery of item [1] or [2] in which a volume ratio of the carboxylate ester in the nonaqueous solvent is 1% by volume to 50% by volume.
[4] The nonaqueous electrolyte secondary battery of item [1] or [2] in which a volume ratio of the carboxylate ester in the nonaqueous solvent is 15% by volume to 30% by volume.
[5] The nonaqueous electrolyte secondary battery of any one of items [1] to [4] in which the carboxylate ester is methyl acetate.
[6] The nonaqueous electrolyte secondary battery of any one of items [1] to [5] in which the BET specific surface area of the lithium nickel cobalt manganese composite oxide is 3.0 m²/g to 3.6 m²/g.
[7] The nonaqueous electrolyte secondary battery of any one of items [1] to [6] in which the nonaqueous electrolyte secondary battery is a battery of a vehicle drive power supply.

## Claims

1. A nonaqueous electrolyte secondary battery (100) comprising:
a positive electrode (50);
a negative electrode (60); and
a nonaqueous electrolyte (80), wherein
the positive electrode (50) includes a positive electrode active material layer (54) containing a positive electrode active material,
the positive electrode active material includes a lithium nickel cobalt manganese composite oxide,
in the lithium nickel cobalt manganese composite oxide, a molar ratio of Ni to all metal elements except for Li is 40% by mole to 60% by mole, and a molar ratio of Co to all the metal elements except for Li is 15% by mole to 25% by mole,
the lithium nickel cobalt manganese composite oxide is in a form of hollow particles (10A, 10B) each including a shell portion (16A, 16B), a hollow portion (14A, 14B) defined in the shell portion (16A, 16B), and a through hole (14Aa, 14Ba) penetrating the shell portion (16A, 16B),
the lithium nickel cobalt manganese composite oxide has a BET specific surface area of 3.0 m²/g or more,
the nonaqueous electrolyte (80) contains a nonaqueous solvent, an electrolyte salt, and lithium bis(oxalato)borate, and
the nonaqueous solvent contains a carboxylate ester having 4 or less carbon atoms.

2. The nonaqueous electrolyte secondary battery (100) according to claim 1, wherein a concentration of lithium bis(oxalato)borate in the nonaqueous electrolyte (80) is 0.20% by mass to 0.80% by mass.

3. The nonaqueous electrolyte secondary battery (100) according to claim 1, wherein a volume ratio of the carboxylate ester in the nonaqueous solvent is 1% by volume to 50% by volume.

4. The nonaqueous electrolyte secondary battery (100) according to claim 1, wherein a volume ratio of the carboxylate ester in the nonaqueous solvent is 15% by volume to 30% by volume.

5. The nonaqueous electrolyte secondary battery (100) according to claim 1, wherein the carboxylate ester is methyl acetate.

6. The nonaqueous electrolyte secondary battery (100) according to claim 1, wherein the BET specific surface area of the lithium nickel cobalt manganese composite oxide is 3.0 m²/g to 3.6 m²/g.

7. The nonaqueous electrolyte secondary battery (100) according to claim 1, wherein the nonaqueous electrolyte secondary battery (100) is a battery of a vehicle drive power supply.
